# EUROPEAN PATENT APPLICATION

(11) **EP 3 093 055 A1**
(43) Date of publication of application: **16.11.2016**
(21) Application number: 14877869.9
(22) Date of filing: 12.12.2014
(51) Int. Cl.: B01D 33/06, B01D 33/58, B01D 33/80, B63B 13/00

(54) **WATER TREATMENT DEVICE AND WATER TREATMENT METHOD**

(30) Priority: 08.01.2014 JP 2014001820
(71) Applicant: Sumitomo Electric Industries, Ltd., Osaka-shi, Osaka 541-0041 (JP)
(72) Inventor: MORIYA, Tomomi, Osaka-shi Osaka 554-0024 (JP); KANAZAWA, Shinichi, Osaka-shi Osaka 554-0024 (JP)
(74) Representative: Boult Wade Tennant
(86) International application number: PCT/JP2014/082941
(87) International publication number: WO 2015/104950

(57) **Abstract**

A water treatment device includes a filter that is rotatable so that a filtering surface moves in a circumferential direction; an untreated-water outflow unit that allows untreated water to flow out from an outside of the filter toward the filtering surface; a filtered-water flow path for leading, from an inside of the filter, filtered water that has permeated through the filter; and a control unit that switches between a filtration operation in which, in a state where the filter rotates, the untreated water is allowed to flow out toward the filtering surface by the untreated-water outflow unit, and the filtered water is led through the filtered-water flow path, and a cleaning operation, in which, in a state where the filter rotates and the filtered-water flow path is closed, the untreated water is allowed to flow out toward the filtering surface by the untreated-water outflow unit.

## Description

### Technical Field

The present invention relates to a water treatment device and a water treatment method, and in particular, to a water treatment method and a water treatment device for performing filtration of untreated water using a filter.

### Background Art

Hitherto, filter devices that perform filtration of untreated water by using a filter have been developed. For example, PTL 1 (Japanese Unexamined Patent Application Publication No. 2010-64162) discloses a technology described below. Specifically, a filter device includes a support shaft that is fixed upright to a base, and a vertical cylindrical filter having two closed ends and detachably attached to the support shaft. A filtered fluid passage that enables communication between the inside and the outside of the filter is formed on the support shaft.

### Citation List

### Patent Literature

PTL 1: Japanese Unexamined Patent Application Publication No. 2010-64162
PTL 2: Japanese Unexamined Patent Application Publication No. 2011-194396

### Summary of Invention

### Technical Problem

In the filter device described in PTL 1, a fluid to be filtered comes in contact with an outer surface of a filter, and adhering substances, which may cause clogging of the filter, are thereby separated from the filter. Thus, the filter can be cleaned. However, when the fluid to be filtered merely comes into contact with the filter, for example, adhering substances may not be separated from the filter, or adhering substances separated from the filter may adhere to the filter again. In such a case, a problem may arise in which a sufficient cleaning effect cannot be obtained, and the filtration performance decreases.

The present invention has been made in order to solve the above problem. An object of the present invention is to provide a water treatment device and a water treatment method that can provide an improved effect of cleaning a filter.

### Solution to Problem

(1) In order to solve the above problem, a water treatment device according to an aspect of the present invention includes a filter that is rotatable so that a filtering surface moves in a circumferential direction; an untreated-water outflow unit that allows untreated water to flow out from an outside of the filter toward the filtering surface; a filtered-water flow path for leading, from an inside of the filter, filtered water that has permeated through the filter; and a control unit that switches between a filtration operation in which, in a state where the filter rotates, the untreated water is allowed to flow out toward the filtering surface by the untreated-water outflow unit, and the filtered water is led through the filtered-water flow path, and a cleaning operation, in which, in a state where the filter rotates and the filtered-water flow path is closed, the untreated water is allowed to flow out toward the filtering surface by the untreated-water outflow unit.

(7) In order to solve the above problem, a water treatment method according to an aspect of the present invention is a water treatment method in a water treatment device including a filter that is rotatable so that a filtering surface moves in a circumferential direction, an untreated-water outflow unit that allows untreated water to flow out toward the filtering surface, and a filtered-water flow path for leading, from an inside of the filter, filtered water that has permeated through the filter, the method including a step of starting a rotation of the filter; and a step of switching between a filtration operation in which, in a state where the filter rotates, the untreated water is allowed to flow out toward the filtering surface by the untreated-water outflow unit, and the filtered water is led through the filtered-water flow path, and a cleaning operation, in which, in a state where the filter rotates and the filtered-water flow path is closed, the untreated water is allowed to flow out toward the filtering surface by the untreated-water outflow unit.

The present invention can be realized as a semiconductor integrated circuit that controls a part of, or the whole of a water treatment device including such a characteristic processing unit. The present invention can be realized not only as a water treatment device including such a characteristic processing unit but also, for example, as a program for allowing a computer to execute such a characteristic processing. Advantageous Effects of Invention

According to the present invention, an improved effect of cleaning a filter can be obtained.

### Brief Description of Drawings

[Fig. 1] Figure 1 is a view illustrating the structure of a water treatment system including a water treatment device according to an embodiment of the present invention.
[Fig. 2] Figure 2 is a vertical sectional view illustrating the structure of a water treatment device according to an embodiment of the present invention.
[Fig. 3] Figure 3 is a horizontal sectional view illustrating the structure of a section taken along line III-III in Fig. 2.
[Fig. 4] Figure 4 is a flowchart illustrating the flow of operations of a water treatment device according to an embodiment of the present invention.
[Fig. 5] Figure 5 is a drawing showing the results of a comparison between the change with time in a differential pressure ΔP of a filter in a water treatment device according to an embodiment of the present invention and the change with time in the differential pressure ΔP of filters in other water treatment devices.
[Fig. 6] Figure 6 is a view illustrating a part of the structure of Modification 1 (first example) of a water treatment device according to an embodiment of the present invention.
[Fig. 7] Figure 7 is a view illustrating the structure of an untreated-water outflow unit illustrated in Fig. 6.
[Fig. 8] Figure 8 is a view illustrating a part of the structure of Modification 1 (second example) of a water treatment device according to an embodiment of the present invention.
[Fig. 9] Figure 9 is a view illustrating a part of the structure of Modification 1 (third example) of a water treatment device according to an embodiment of the present invention.
[Fig. 10] Figure 10 is a sectional view in the horizontal direction, the sectional view illustrating a part of the structure of Modification 2 (first example) of a water treatment device according to an embodiment of the present invention.
[Fig. 11] Figure 11 is a sectional view in the vertical direction, the sectional view illustrating a part of the structure of Modification 2 (second example) of a water treatment device according to an embodiment of the present invention.
[Fig. 12] Figure 12 is a sectional view in the vertical direction, the sectional view illustrating the structure of Modification 3 of a water treatment device according to an embodiment of the present invention.
[Fig. 13] Figure 13 is a sectional view in the vertical direction, the sectional view illustrating the structure of Modification 4 of a water treatment device according to an embodiment of the present invention.

### Reference Signs List

- 11: cartridge
- 12: rotation shaft
- 13: case
- 14: motor (driving unit)
- 15: control unit
- 16: untreated-water flow path
- 17: untreated-water outflow unit
- 18: filtered-water flow path
- 19, 25, 26, 27, 28: discharge flow path
- 25E, 26E, 27E, 28E: inlet
- 20, 104, 125, 126, 127: valve
- 21: filter
- 22: upper lid portion
- 23: lower lid portion
- 24: opening
- 31: chemical flow path
- 32: chemical outflow unit (cleaning liquid outflow unit)
- 33, 42, 103: pump
- 34: filter
- 35: neutralization flow path
- 36: neutralization treatment unit
- 41: pressure-rising path
- 101: water treatment device
- 102: ultraviolet irradiation device
- 105: seawater intake
- 106: tank
- 121, 122, 123, 124: pipe
- 201: water treatment system
- R: region
- L: straight line
- D: arrow

### Description of Embodiments

First, the contents of embodiments of the present invention will be listed and described.
(1) A water treatment device according to an embodiment of the present invention includes a filter that is rotatable so that a filtering surface moves in a circumferential direction; an untreated-water outflow unit that allows untreated water to flow out from an outside of the filter toward the filtering surface; a filtered-water flow path for leading, from an inside of the filter, filtered water that has permeated through the filter; and a control unit that switches between a filtration operation in which, in a state where the filter rotates, the untreated water is allowed to flow out toward the filtering surface by the untreated-water outflow unit, and the filtered water is led through the filtered-water flow path, and a cleaning operation, in which, in a state where the filter rotates and the filtered-water flow path is closed, the untreated water is allowed to flow out toward the filtering surface by the untreated-water outflow unit.
   In the cleaning operation, since the filtered-water flow path is closed, filtered water accumulates inside the filter without being introduced into the filtered-water flow path, and the inside of the filter is filled with the filtered water. When untreated water is further allowed to flow out from the untreated-water outflow unit toward the filtering surface, the possibility that, after the untreated water comes in contact with the filtering surface, the untreated water may flow to the outside of the filter without permeating through the filter increases. As a result, it is possible to prevent plankton, suspensoid, or the like, which may cause clogging of the filter, from adhering to the filter.
   By filling the inside of the filter with the filtered water, suspensoid or the like that has already adhered becomes easily separated from the filter.
   That is, as described above, the water treatment device according to an embodiment of the present invention switches between the filtration operation for filtering untreated water and the cleaning operation for efficiently cleaning the filter. With this structure, an improved effect of cleaning the filter can be obtained.
(2) Preferably, the water treatment device further includes a driving unit that rotates the filter, in which the control unit controls the driving unit to make a rotational speed of the filter in the filtration operation and a rotational speed of the filter in the cleaning operation different from each other.
   The higher the rotational speed of the filter, the larger the area of the filtering surface that comes in contact with untreated water per unit time. Thus, a large amount of untreated water that can be filtered per unit time can be ensured. However, with an increase in the rotational speed of the filter, a region with which the untreated water does not sufficiently come in contact is generated in the filter, and the filter may not be sufficiently cleaned.
   In view of this, as described above, the water treatment device according to an embodiment of the present invention makes the rotational speed of the filter in the filtration operation and the rotational speed of the filter in the cleaning operation different from each other, for example, makes the rotational speed of the filter in the filtration operation high and makes the rotational speed of the filter in the cleaning operation low. With this structure, the rotational speed of the filter can be appropriately controlled so that a large amount of untreated water that can be filtered per unit time can be ensured in the filtration operation, and the filter can be sufficiently cleaned in the cleaning operation.
(3) Preferably, the untreated-water outflow unit has an opening for allowing the untreated water to flow out, the water treatment device further includes a discharge flow path for discharging water present outside the filter, the discharge flow path being located at a position in a predetermined range extending from a region where the untreated water from the opening comes in contact with the filtering surface, the position being located on the opening side with respect to the filter, and an inlet of the discharge flow path is directed to the region.
   This structure increases the possibility that adhering substances separated from the filter may be introduced into the discharge flow path together with untreated water, and thus it is possible to prevent the adhering substances from adhering to the filter again.
(4) Preferably, the water treatment device further includes a cleaning liquid outflow unit that allows a cleaning liquid to flow out toward the filtering surface, in which the control unit switches a cleaning liquid outflow operation in which, in a state where the filter rotates, the filtered-water flow path is closed, and outflow of the untreated water by the untreated-water outflow unit is not performed, the cleaning liquid is allowed to flow out by the cleaning liquid outflow unit toward the filtering surface, the filtration operation, and the cleaning operation.
   In this manner, by performing the cleaning liquid outflow operation as a step other than the filtration operation and the cleaning operation, the effect of cleaning the filter can be further improved.
(5) Preferably, in the cleaning operation, the control unit controls a pump to apply a pressure to the inside of the filter.
   When the pressure of the inside of the filter becomes higher than the pressure of the outside of the filter as a result of the application of the pressure to the inside of the filter, gas or liquid flows from the inside of the filter toward the outside of the filter. As a result, substances adhering to the filter become easily separated toward the outside of the filter. That is, with the structure in which a pressure is applied to the inside of the filter as described above, the effect of cleaning the filter can be further improved.
(6) Preferably, the filtering surface is formed to have a shape of pleats folded along radial directions of a rotation circle of the filter.
   With this structure, a large area of the filtering surface that comes in contact with untreated water per unit time is ensured without increasing the size of the filter as a whole. Thus, the amount of untreated water that can be filtered per unit time can be increased.
(7) A water treatment method according to an embodiment of the present invention is a water treatment method in a water treatment device including a filter that is rotatable so that a filtering surface moves in a circumferential direction, an untreated-water outflow unit that allows untreated water to flow out toward the filtering surface, and a filtered-water flow path for leading, from an inside of the filter, filtered water that has permeated through the filter, the method including a step of starting a rotation of the filter; and a step of switching between a filtration operation in which, in a state where the filter rotates, the untreated water is allowed to flow out toward the filtering surface by the untreated-water outflow unit, and the filtered water is led through the filtered-water flow path, and a cleaning operation, in which, in a state where the filter rotates and the filtered-water flow path is closed, the untreated water is allowed to flow out toward the filtering surface by the untreated-water outflow unit.

In the cleaning operation, since the filtered-water flow path is closed, filtered water accumulates inside the filter without being introduced into the filtered-water flow path, and the inside of the filter is filled with the filtered water. When untreated water is further allowed to flow out from the untreated-water outflow unit toward the filtering surface, the possibility that, after the untreated water comes in contact with the filtering surface, the untreated water may flow to the outside of the filter without permeating through the filter increases. As a result, it is possible to prevent plankton, suspensoid, or the like, which may cause clogging of the filter, from adhering to the filter.

By filling the inside of the filter with the filtered water, suspensoid or the like that has already adhered becomes easily separated from the filter.

That is, in the water treatment method according to an embodiment of the present invention, by switching between the filtration operation for filtering untreated water and the cleaning operation for efficiently cleaning the filter as described above, an improved effect of cleaning the filter can be obtained.

Embodiments of the present invention will now be described with reference to the drawings. In the drawings, the same portions or the corresponding portions are assigned the same reference numerals, and a description thereof is not repeated. At least some of features of the embodiments described below may be combined as required.

### [Structure and basic operation]

### (Structure of overall water treatment system)

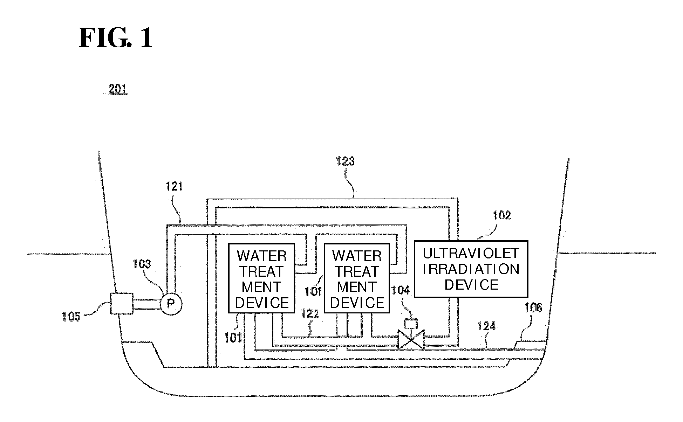

Figure 1 is a view illustrating the structure of a water treatment system including a water treatment device according to an embodiment of the present invention.

Referring to Fig. 1, a water treatment system 201 performs, for example, filtration of ballast water carried in a ship or ballast water discharged from a ship. The water treatment system 201 includes water treatment devices 101, an ultraviolet irradiation device 102, a pump 103, a valve 104, a seawater intake 105, a tank 106, and pipes 121, 122, 123, and 124.

The water treatment system 201 illustrated in Fig. 1 includes a plurality of water treatment devices 101. However, the structure of the water treatment system 201 is not limited to such a structure including a plurality of water treatment devices 101. The water treatment system 201 may have a structure including a single water treatment device 101.

When ballast water is carried in a ship, seawater flows as untreated water from the seawater intake 105, and this water to be treated is pushed out by the pump 103 and supplied to the water treatment devices 101 through the pipe 121. The water treatment devices 101 each perform filtration of the untreated water using a filter in order to remove plankton, suspensoid, or the like contained in the untreated water supplied from the pump 103. The water treatment devices 101 then supply filtered water to the ultraviolet irradiation device 102 through the pipe 122.

The ultraviolet irradiation device 102 conducts, for example, sterilization of microbes contained in the filtered water supplied from the water treatment devices 101 by irradiating the filtered water with ultraviolet rays. Subsequently, the ultraviolet irradiation device 102 supplies the filtered water after being irradiated with ultraviolet rays to the tank 106 through the pipe 123. Consequently, ballast water obtained after the filtration and the sterilization treatment is stored in the tank 106.

The plankton, suspensoid, or the like removed in the water treatment devices 101 is discharged to the outside of the ship or the like through the pipe 124.

The water treatment system 201 may be used for filtration of untreated water other than ballast water carried in a ship or ballast water discharged from a ship.

### (Structure of water treatment device)

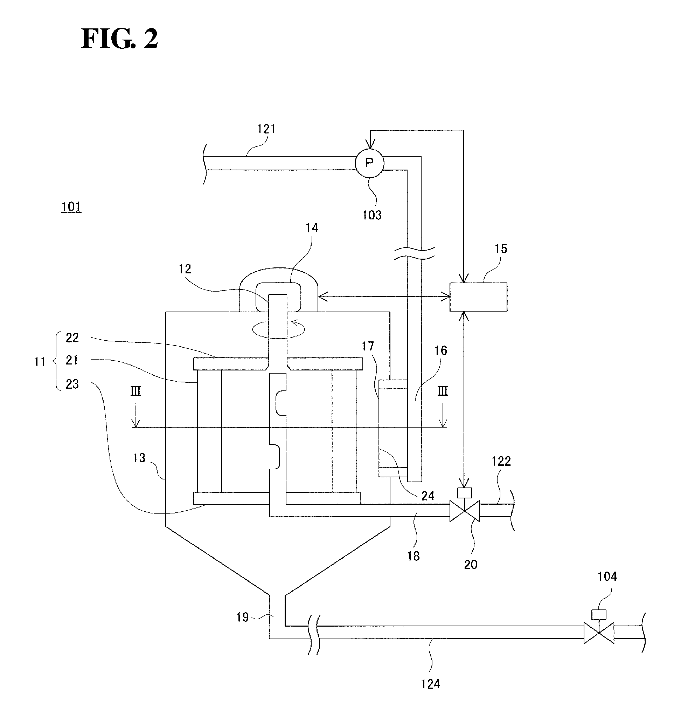

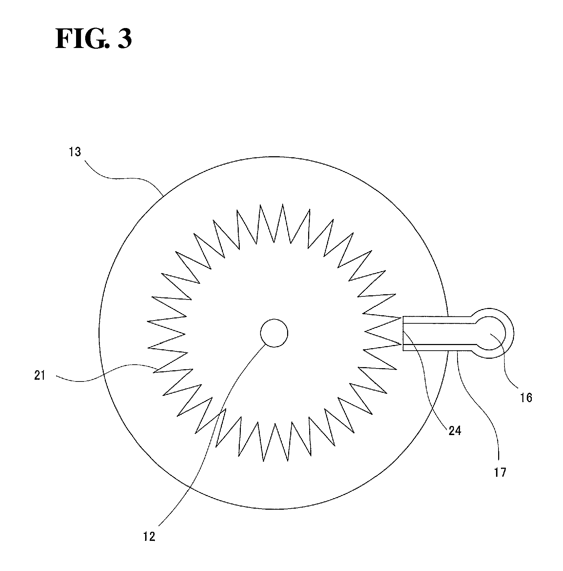

Figure 2 is a vertical sectional view illustrating the structure of a water treatment device according to an embodiment of the present invention. Figure 3 is a horizontal sectional view illustrating the structure of a section taken along line III-III in Fig. 2.

Referring to Figs. 2 and 3, a water treatment device 101 includes a cartridge 11, a rotation shaft 12, a case 13, a motor (driving unit) 14, a control unit 15, an untreated-water flow path 16, an untreated-water outflow unit 17, a filtered-water flow path 18, discharge flow path 19, and a valve 20.

The cartridge 11 is detachably attached to the case 13 and includes a filter 21, an upper lid portion 22, and a lower lid portion 23. An opening 24 from which untreated water flows out is formed in the untreated-water outflow unit 17.

The filter 21 has a cylindrical shape and is formed by using, for example, a polyethylene non-woven cloth. The filter 21 is rotatably attached so that a filtering surface moves in the circumferential direction about the rotation shaft 12. The filtering surface of the filter 21 is formed to have a shape of pleats folded along radial directions of the rotation circle so as to repeat peaks and valleys.

The upper lid portion 22 covers an upper portion of the filter 21, and the lower lid portion 23 covers a lower portion of the filter 21. The case 13 is provided so as to cover the whole cartridge 11. The motor 14 is connected to the rotation shaft 12 and rotates the filter 21 about the rotation shaft 12.

The untreated-water flow path 16 supplies untreated water, which is pushed out from the pump 103, to the untreated-water outflow unit 17. The untreated-water outflow unit 17 extends from the untreated-water flow path 16 toward the inside of the case 13 and allows the untreated water supplied from the untreated-water flow path 16 to flow from the opening 24 toward the filtering surface of the filter 21. The opening 24 is formed to have, for example, a thin rectangular shape extending in the vertical direction.

The control unit 15 controls driving of the motor 14, opening and closing of the valve 20, and driving of the pump 103.

For example, the control unit 15 opens the valve 20 and drives the motor 14 and the pump 103. In this case, the untreated water flowing out from the opening 24 of the untreated-water outflow unit 17 toward the filtering surface is filtered by permeation from the outside of the filter 21 to the inside of the filter 21. The resulting filtered water is introduced to the filtered-water flow path 18 disposed inside the filter 21 and supplied from the filtered-water flow path 18 to another water treatment device 101 or an ultraviolet irradiation device 102 through the valve 20.

This operation performed by the water treatment device 101 is hereinafter referred to as "filtration operation".

In the filtration operation performed by the water treatment device 101, when untreated water comes in contact with the filter 21, adhering substances, which may cause clogging of the filter 21, may be consequently separated from the filter 21. That is, in the filtration operation of the water treatment device 101, cleaning of the filter 21 may be performed in parallel with the filtration of untreated water. In such a case, the separated adhering substances flow to the bottom of the case 13 together with untreated water and the like that have not passed through the filter 21. The untreated water, the adhering substances separated from the filter 21, etc. that flow to the bottom of the case 13 are then discharged to the outside of the water treatment device 101 through the discharge flow path 19 and a pipe 124.

For example, the control unit 15 closes the valve 20 and drives the motor 14 and the pump 103. In this case, the untreated water that is allowed to flow out from the opening 24 of the untreated-water outflow unit 17 toward the filtering surface is filtered by permeation from the outside of the filter 21 to the inside of the filter 21 as in the case of the filtration operation.

However, since the valve 20 is closed, filtered water accumulates in the filter 21 without being introduced into the filtered-water flow path 18, and the inside of the filter 21 is filled with the filtered water. When untreated water is further allowed to flow out from the opening 24 of the untreated-water outflow unit 17 toward the filtering surface, the possibility that, after the untreated water comes in contact with the filtering surface, the untreated water may flow to the bottom of the case 13 without permeating through the filter 21 increases.

As a result, substances adhering to the filter 21 are separated, and in addition, new substances are prevented from adhering to the filter 21. Thus, the filter 21 is efficiently cleaned. The untreated water, the adhering substances separated from the filter 21, etc. that flow to the bottom of the case 13 are then discharged to the outside of the water treatment device 101 through the discharge flow path 19 and the pipe 124.

This operation performed by the water treatment device 101, that is, the operation of cleaning substances adhering to the filter 21 without filtering untreated water is hereinafter referred to as "cleaning operation".

### (Details of control by control unit)

Herein, it is expected that, with an increase in the flow rate of untreated water pushed out by the pump 103, the pleats of the filter 21 widely extend to increase the effect of cleaning the filter 21. However, with an increase in the flow rate, the possibility of damaging the filter 21 increases. Therefore, it is desirable to appropriately set the flow rate of the untreated water pushed out by the pump 103.

The higher the rotational speed of the motor 14, the larger the area of the filtering surface that comes in contact with untreated water per unit time. Thus, it is expected that the amount of untreated water that can be filtered per unit time increases. However, with an increase in the rotational speed, a region with which the untreated water does not sufficiently come in contact is generated in the filter 21, and the filter 21 may not be sufficiently cleaned. Therefore, it is desirable to appropriately set the rotational speed of the motor 14.

The water treatment device 101 does not necessarily include the motor 14. However, considering the relationship between the speed of the filtration and the effect of cleaning the filter 21 as described above, preferably, the water treatment device 101 includes the motor 14, and the rotational speed of the motor 14 is controllable.

The control unit 15 of the water treatment device 101 according to an embodiment of the present invention can set the flow rate of untreated water pushed out from the pump 103 and the rotational speed of the motor 14 to different values in each of the filtration operation and the cleaning operation.

For example, in the filtration operation, the control unit 15 controls so that the rotational speed of the motor 14 becomes 50 rpm. In the filtration operation, the control unit 15 controls so that the flow rate of untreated water pushed out from the pump 103 becomes 7 m/s.

In the cleaning operation, the control unit 15 controls so that the rotational speed of the motor 14 becomes 25 to 35 rpm. In the cleaning operation, the control unit 15 controls so that the flow rate of untreated water pushed out from the pump 103 becomes higher than the flow rate of untreated water pushed out from the pump 103 in the filtration operation by about 10%, that is, so that the flow rate becomes about 7.7 m/s.

Consequently, in each of the filtration operation and the cleaning operation, the flow rate of untreated water pushed out form the pump 103 and the rotational speed of the motor 14 can be appropriately set.

### [Flow of operation]

Next, the flow of operations of the water treatment device 101 according to an embodiment of the present invention will be described.

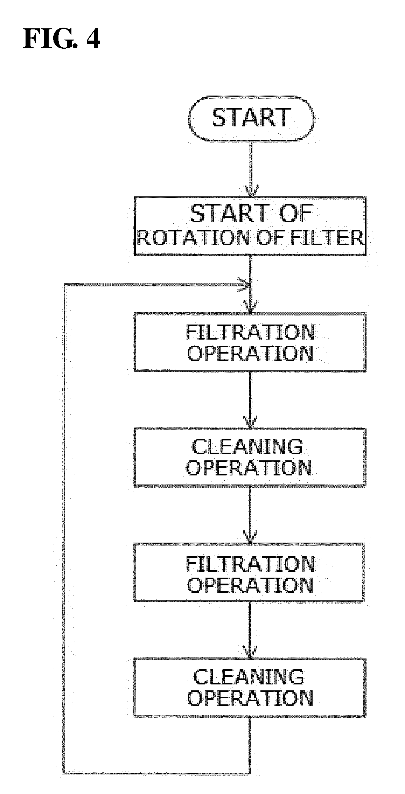

Figure 4 is a flowchart illustrating the flow of operations of a water treatment device according to an embodiment of the present invention.

Referring to Fig. 4, the water treatment device 101 alternately repeats the filtration operation and the cleaning operation. For example, the control unit 15 in the water treatment device 101 drives the motor 14, and the filter 21 thereby starts rotation. Subsequently, the water treatment device 101 performs the filtration operation for 10 hours. Subsequently, the water treatment device 101 switches to the cleaning operation and performs the cleaning operation for 1 hour. Subsequently, the water treatment device 101 switches to the filtration operation again and performs the filtration operation for 10 hours. The water treatment device 101 repeats this flow of operations.

The control unit 15 in the water treatment device 101 senses, for example, a differential pressure ΔP between a pressure of the outside of the filter 21 and a pressure of the inside of the filter 21. The control unit 15 may be configured so that when the differential pressure ΔP becomes a particular value or more, the control unit 15 switches from the filtration operation to the cleaning operation and when the differential pressure ΔP becomes less than the particular value, the control unit 15 switches from the cleaning operation to the filtration operation.

The control unit 15 in the water treatment device 101 senses, for example, the turbidity of filtered water flowing in the filtered-water flow path 18. The control unit 15 may be configured so that when the sensed turbidity is a particular value or more, the control unit 15 switches from the filtration operation to the cleaning operation and when the turbidity becomes less than the particular value, the control unit 15 switches from the cleaning operation to the filtration operation.

The water treatment device 101 may be configured to, for example, perform the filtration operation in the daytime and to perform the cleaning operation in the nighttime.

### (Comparison results)

When plankton, suspensoid, or the like adheres to the filter and clogging occurs, permeation of untreated water from the outside of the filter to the inside of the filter is not performed smoothly, and the differential pressure ΔP between the pressure of the outside of the filter and the pressure of the inside of the filter gradually increases. The change with time in the differential pressure ΔP of a filter will be described below while comparing the water treatment device 101 according to an embodiment of the present invention with other water treatment devices.

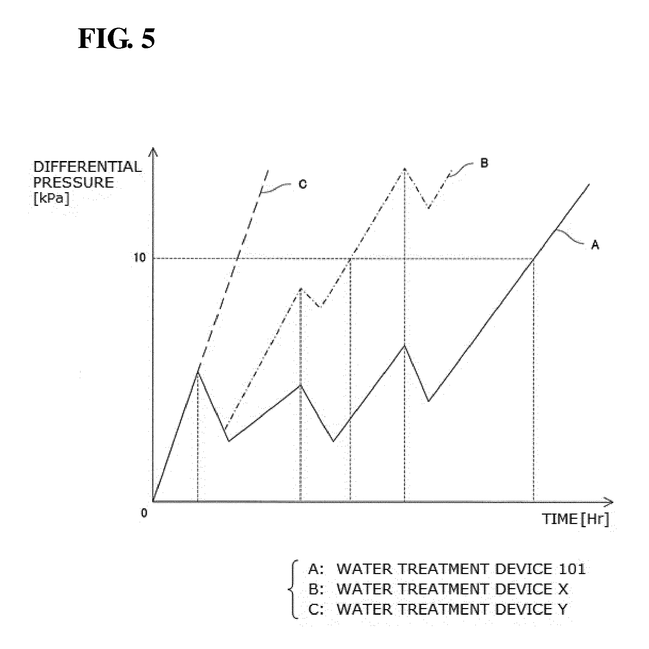

Figure 5 is a drawing showing the results of a comparison between the change with time in the differential pressure ΔP of a filter in a water treatment device according to an embodiment of the present invention and the change with time in the differential pressure ΔP of filters in other water treatment devices.

Graph A in Fig. 5 shows the change with time in the differential pressure ΔP of the filter 21 in the water treatment device 101 according to an embodiment of the present invention, the water treatment device 101 performing, for example, the filtration operation for 10 hours, subsequently switching to the cleaning operation, performing the cleaning operation for 1 hour, switching to the filtration operation again, and performing the filtration operation for 10 hours.

Graph B in Fig. 5 shows the change with time in the differential pressure ΔP of a filter in a water treatment device X which performs the filtration operation for 10 hours, subsequently performs an operation of cleaning a filter by allowing water to flow out from the inside of the filter toward the outside of the filter (hereinafter referred to as "reverse cleaning operation") for 1 hour, switches to the filtration operation again, and performs the filtration operation for 10 hours. Graph C in Fig. 5 shows the change with time in the differential pressure ΔP of a filter in a water treatment device Y which continuously performs the filtration operation and performs neither the cleaning operation nor the reverse cleaning operation.

It is assumed that the water treatment device 101, the water treatment device X, and the water treatment device Y include the same filter that can perform, for example, filtration at a speed of 40 tons per minute in a state where clogging does not occur.

In this case, as shown in Graphs A, B, and C, the differential pressure ΔP of each of the filters of the water treatment device 101, the water treatment device X, and the water treatment device Y increases with time. However, the differential pressure ΔP of the filter in the water treatment device X increases more gradually than the differential pressure ΔP of the filter in the water treatment device Y.

Furthermore, the differential pressure ΔP of the filter 21 in the water treatment device 101 increases more gradually than the differential pressure ΔP of the filter in the water treatment device X. For example, the time from 0 [kPa] to 10 [kPa] in differential pressure ΔP on Graph A is about 1.5 to 2 times the time from 0 [kPa] to 10 [kPa] in differential pressure ΔP on Graph B.

The cause of these results is believed to be as follows. For example, in the reverse cleaning operation performed by the water treatment device X, since a water flow concentrates on a region where clogging does not significantly occur in the filter, only some of substances adhering to the filter are separated, and adhering substances that cannot be separated may remain in a larger amount.

Specifically, according to the water treatment device 101 according to an embodiment of the present invention, by alternately switching the filtration operation and the cleaning operation, an improved effect of cleaning a filter can be obtained compared with the water treatment device X in which the filtration operation and the reverse cleaning operation are alternately switched, and the water treatment device Y which performs neither the cleaning operation nor the reverse cleaning operation.

### (Modification 1)

### (a) First example

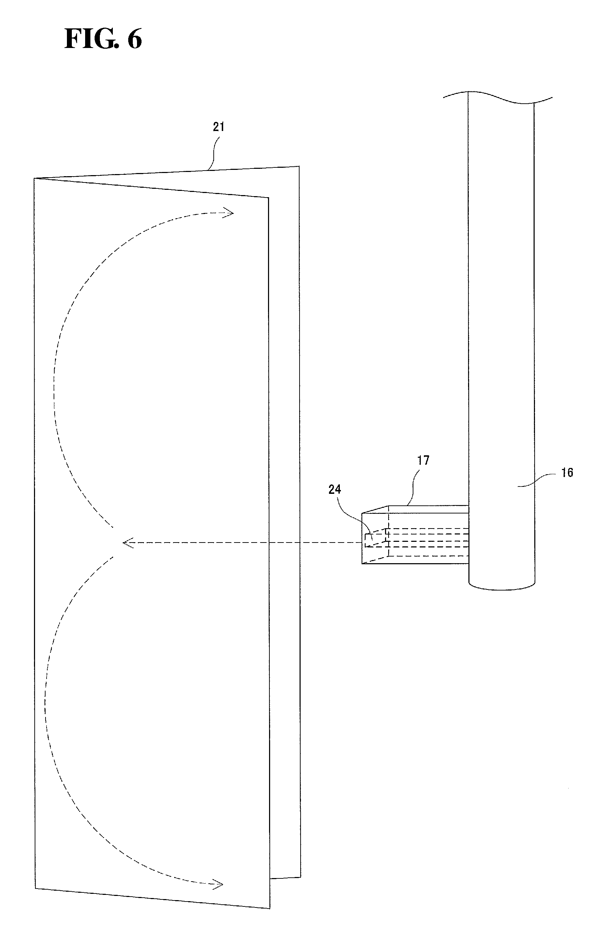

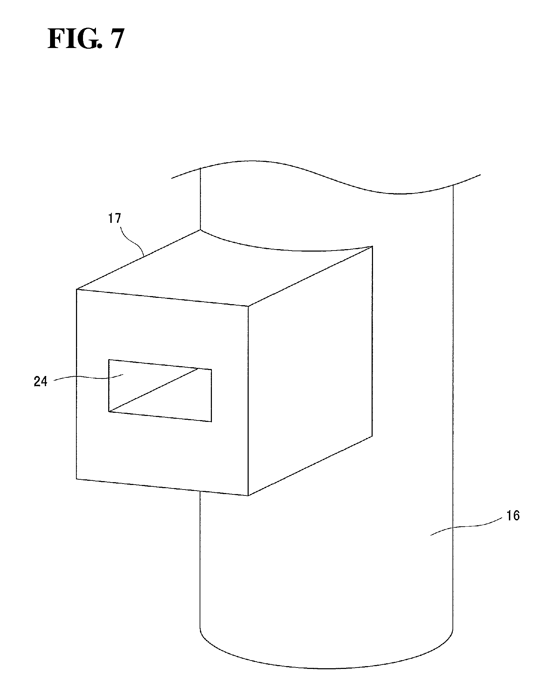

Figure 6 is a view illustrating a part of the structure of Modification 1 (first example) of a water treatment device according to an embodiment of the present invention. Figure 7 is a view illustrating the structure of an untreated-water outflow unit illustrated in Fig. 6.

Referring to Figs. 6 and 7, in Modification 1 (first example) of the water treatment device 101, an opening 24 formed in the untreated-water outflow unit 17 has a rectangular shape in which a length in the vertical direction is shorter than a length of the filter 21 in the vertical direction. More preferably, the opening 24 is formed so that the length in the vertical direction is short enough to the extent that, after untreated water comes in contact with the filter 21, a flow path of the untreated water is easily formed. In addition, the opening 24 is disposed at a position near to the center of the filter 21 in the vertical direction.

In the case of this structure, untreated water flowing out from the opening 24 comes in contact with a position near to the center of the filter 21 in the vertical direction in a concentrated manner to form a flow path that circulates from this central position in the filter 21 and that is directed in an upward direction and a downward direction. With this structure, substances adhering to the filter 21 can easily flow out to the outside. The opening 24 is disposed at such a vertical position that, after untreated water comes in contact with the filter 21, a flow path directed to an upward direction and a flow path directed to a downward direction are formed. For example, the opening 24 is provided around the center of the filter 21 in the vertical direction and in a range of upper and lower 10% of the length of the filter 21 in the vertical direction.

The opening 24 in Fig. 7 is preferably formed so as to have the same area as the opening 24 in Fig. 2. With this structure, the flow rate of untreated water that is allowed to flow out from the opening 24 in Fig. 7 can be the same as the flow rate of untreated water that is allowed to flow out from the opening 24 in Fig. 2. The opening 24 may have a shape other than a rectangle.

### (b) Second example

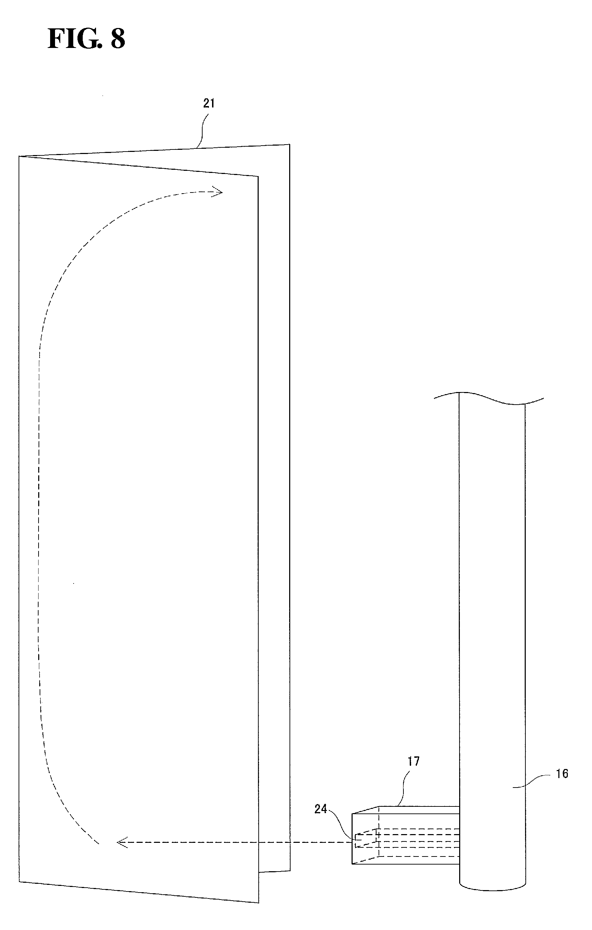

Figure 8 is a view illustrating a part of the structure of Modification 1 (second example) of a water treatment device according to an embodiment of the present invention.

Referring to Fig. 8, the shape of the opening 24 in Modification 1 (second example) of the water treatment device 101 is the same as the opening 24 illustrated in Fig. 7. The opening 24 is disposed at a vertical position facing a lower side of the filter 21 in the vertical direction. In the case of this structure, untreated water flowing out from the opening 24 comes in contact with a position on the lower side of the filter 21 in the vertical direction in a concentrated manner. Consequently, a flow path directed from this lower side position toward an upward direction is formed. With this structure, substances adhering to the filter 21 can easily flow out to the outside.

### (c) Third example

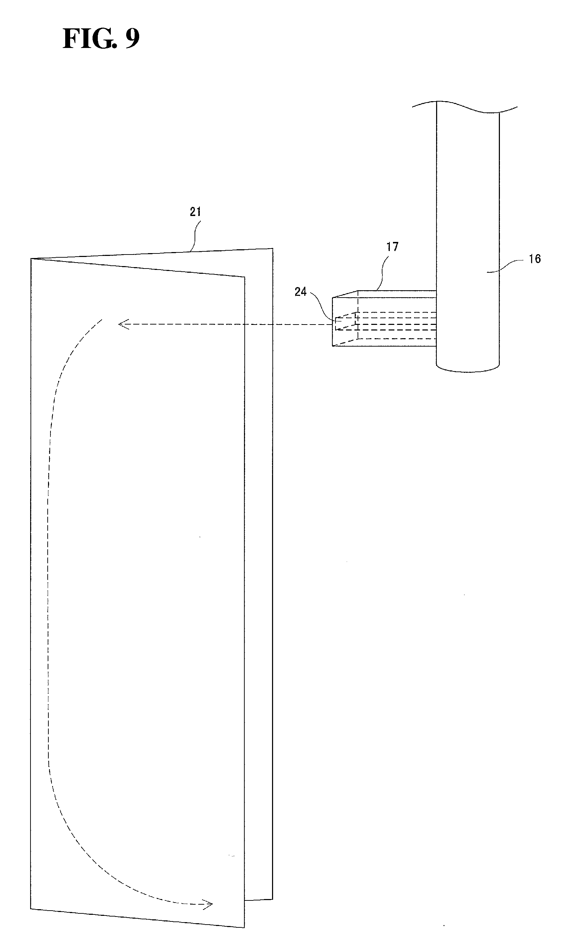

Figure 9 is a view illustrating a part of the structure of Modification 1 (third example) of a water treatment device according to an embodiment of the present invention.

Referring to Fig. 9, the shape of the opening 24 in Modification 1 (third example) of the water treatment device 101 is the same as the opening 24 illustrated in Fig. 7. The opening 24 is disposed at a vertical position facing an upper side of the filter 21 in the vertical direction. In the case of this structure, untreated water flowing out from the opening 24 comes in contact with a position on the upper side of the filter 21 in the vertical direction in a concentrated manner. Consequently, a flow path directed from this upper side position toward a downward direction is formed. With this structure, substances adhering to the filter 21 can easily flow out to the outside.

### (Modification 2)

### (a) First example

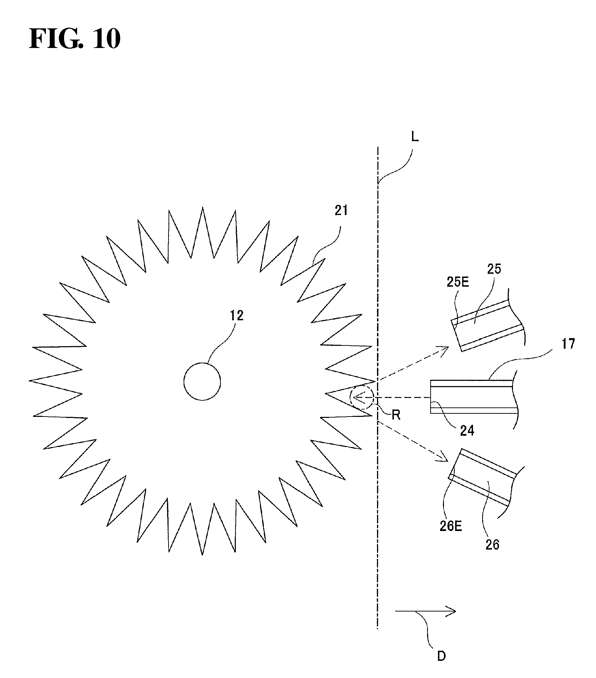

Figure 10 is a sectional view in the horizontal direction, the sectional view illustrating a part of the structure of Modification 2 (first example) of a water treatment device according to an embodiment of the present invention.

Referring to Fig. 10, in Modification 2 (first example) of the water treatment device 101, discharge flow paths 25 and 26 are disposed, for example, at positions in a predetermined range extending from a region R where untreated water from an opening 24 comes in contact with the filtering surface, the position being located on the opening 24 side with respect to the filter 21, that is, on the side opposite to the filter 21 with respect to the straight line L, the side being shown by the direction of the arrow D. These discharge flow paths 25 and 26 are disposed, for example, on both sides of an untreated-water outflow unit 17 in the horizontal direction.

More preferably, an inlet 25E of the discharge flow path 25 and an inlet 26E of the discharge flow path 26 are directed to the region R. Specifically, the inlets 25E and 26E are directed to flow path directions of untreated water when the untreated water flowing out from the opening 24 comes in contact with the filter 21, then circulates in the filter 21, and flows in directions of the outside of the filter 21.

The water treatment device 101 may have a structure in which one of the discharge flow path 25 and the discharge flow path 26 is provided.

The discharge flow paths 25 and 26 are connected to, for example, the discharge flow path 19 illustrated in Fig. 2. To the discharge flow paths 25 and 26, adhering substances separated from the filter 21 flow together with untreated water etc. that does not permeate through the filter 21 and that is present outside the filter 21 in the case 13. The adhering substances and the like are discharged to the outside of the water treatment device 101 through the discharge flow path 19.

### (b) Second example

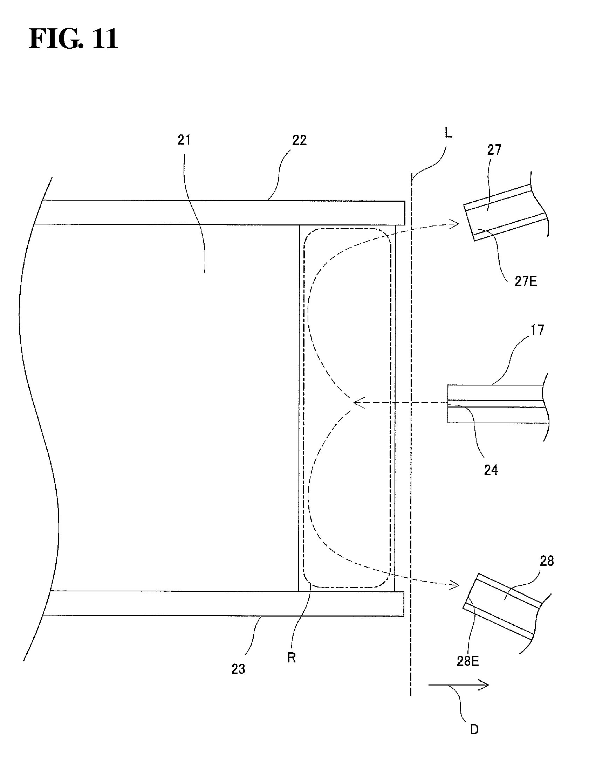

Figure 11 is a sectional view in the vertical direction, the sectional view illustrating a part of the structure of Modification 2 (second example) of a water treatment device according to an embodiment of the present invention.

Referring to Fig. 11, in Modification 2 (second example) of the water treatment device 101, discharge flow paths 27 and 28 are disposed, for example, at positions in a predetermined range extending from a region R where untreated water from an opening 24 comes in contact with the filtering surface, the positions being located on the opening 24 side with respect to the filter 21, that is, on the side opposite to the filter 21 with respect to the straight line L, the side being shown by the direction of the arrow D. These discharge flow paths 27 and 28 are disposed, for example, on the upper side and the lower side of an untreated-water outflow unit 17 in the vertical direction.

More preferably, the opening 24 is disposed at a position near to the center of the filter 21 in the vertical direction, and an inlet 27E of the discharge flow path 27 and an inlet 28E of the discharge flow path 28 are directed to the region R. Specifically, the inlets 27E and 28E are directed to flow path directions of untreated water when the untreated water flowing out from the opening 24 comes in contact with the filter 21, then circulates in the filter 21, and flows in directions of the outside of the filter 21.

The water treatment device 101 may have a structure in which one of the discharge flow path 27 and the discharge flow path 28 is provided. The water treatment device 101 may have a structure in which at least one of the discharge flow path 25 and the discharge flow path 26 illustrated in Fig. 10, and at least one of the discharge flow path 27 and the discharge flow path 28 illustrated in Fig. 11 are provided in combination.

The discharge flow paths 27 and 28 are connected to, for example, the discharge flow path 19 illustrated in Fig. 2. To the discharge flow paths 27 and 28, adhering substances separated from the filter 21 flow together with untreated water etc. that does not permeate through the filter 21 and that is present outside the filter 21 in the case 13. The adhering substances and the like are discharged to the outside of the water treatment device 101 through the discharge flow path 19.

### (Modification 3)

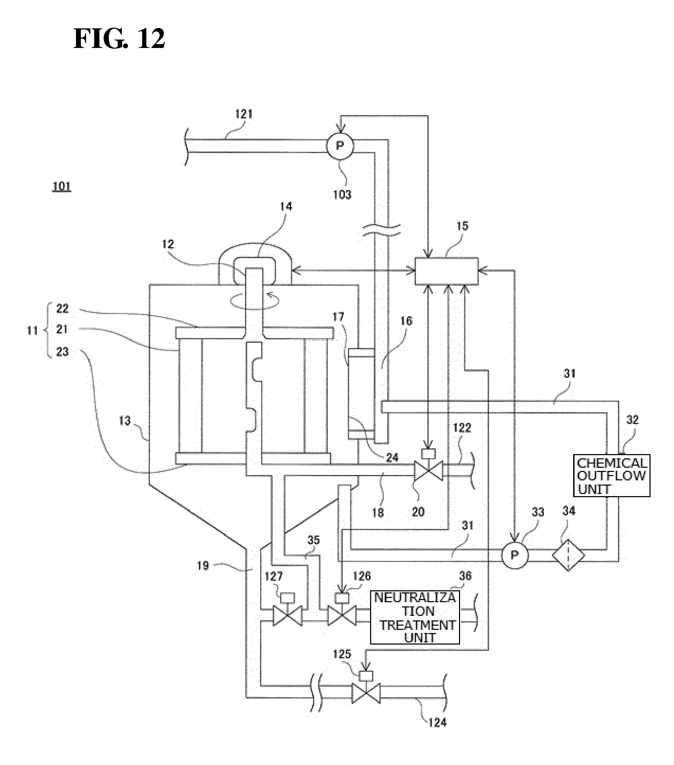

Figure 12 is a sectional view in the vertical direction, the sectional view illustrating the structure of Modification 3 of a water treatment device according to an embodiment of the present invention.

Referring to Fig. 12, in comparison with the water treatment device 101 illustrated in Fig. 2, Modification 3 of the water treatment device 101 further includes a chemical flow path 31, a chemical outflow unit (cleaning liquid outflow unit) 32, a pump 33, a filter 34, a neutralization flow path 35, a neutralization treatment unit 36, and valves 125, 126, and 127. The neutralization flow path 35 is connected to the discharge flow path 19 and the filtered-water flow path 18.

The valve 125 is used for opening and closing the pipe 124. The valve 126 is used for opening and closing the neutralization flow path 35. The valve 127 is used for opening and closing a flow path from the discharge flow path 19 to the neutralization flow path 35. The control unit 15 further controls driving of the pump 33 and opening and closing of the valves 125, 126, and 127 in addition to driving of the motor 14, opening and closing of the valve 20, and driving of the pump 103.

For example, the control unit 15 drives the pump 33, thereby supplying a cleaning liquid that contains a chemical and that is allowed to flow from the chemical outflow unit 32 to the case 13 through the chemical flow path 31, the untreated-water flow path 16, and the untreated-water outflow unit 17. This chemical is sodium hypochlorite, chlorine dioxide, limonene, or the like. At this time, the control unit 15 closes the valve 20, stops the driving of the pump 103, and further drives the motor 14. The control unit 15 closes the valves 125, 126, and 127.

In this case, the chemical supplied into the case 13 also permeates into the filter 21 of the cartridge 11 and cleans substances adhering to the filter 21 from the outside of the filter 21. The cleaning liquid containing the chemical and the adhering substances separated from the filter 21 are retained outside the filter 21 and introduced into the chemical flow path 31 by the pump 33. The cleaning liquid and the adhering substances are filtered through the filter 34 and then flow back to the case 13 through the chemical outflow unit 32 and the chemical flow path 31.

Specifically, since the valves 20, 125, 126, 127 are closed, the cleaning liquid containing the chemical circulates through the case 13, the pump 33, the filter 34, and the chemical outflow unit 32 while cleaning the filter 21. The above operation performed by the water treatment device 101 is hereinafter referred to as "chemical circulation operation" (cleaning liquid outflow operation).

In this chemical circulation operation, as a result of reaction between the chemical and the substance adhering to the filter 21, the concentration of the chemical is decreased. Therefore, a control device of the water treatment device 101 may be configured to monitor the concentration of the chemical and to add the chemical in accordance with the monitored concentration.

The time during which the chemical circulation operation is performed varies in accordance with the concentration of the chemical. For example, when the concentration of the chemical is about 300 ppm, the chemical circulation operation is performed 5 hours or more.

After the control unit 15 stops the driving of the pump 33 to terminate the chemical circulation operation, the chemical should not be discharged to the outside of the water treatment device 101 without further treatment. Thus, it is necessary to neutralize the cleaning liquid containing the chemical. For this purpose, the control unit 15 opens the valves 126 and 127 and keeps the valves 20 and 125 closed.

Consequently, the cleaning liquid that has permeated through the filter 21 and accumulated in the filter 21, the cleaning liquid that has not permeated through the filter 21, and adhering substances that have been separated from the filter 21 and flowed to the outside of the filter 21 are supplied to the neutralization treatment unit 36 through the neutralization flow path 35 or the discharge flow path 19, neutralized in the neutralization treatment unit 36, and then discharged to the outside of the water treatment device 101.

The water treatment device 101 according to Modification 3 switches, for example, from the filtration operation or the cleaning operation to the chemical circulation operation at a predetermined time. The water treatment device 101 performs the chemical circulation operation for a predetermined period of time and then performs the filtration operation or the cleaning operation again. When the operation is returned to the filtration operation again, the control unit 15 closes the valves 126 and 127 and opens the valves 20 and 125.

### (Modification 4)

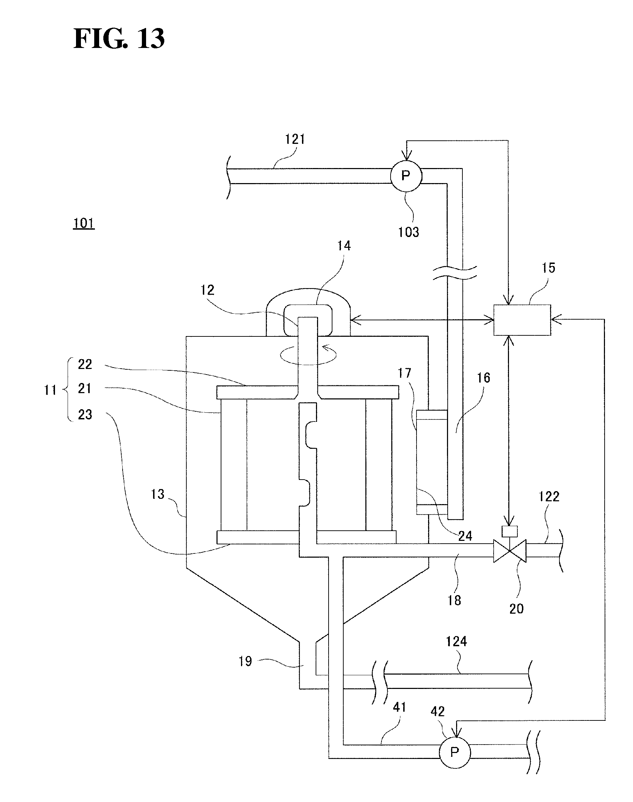

Figure 13 is a sectional view in the vertical direction, the sectional view illustrating the structure of Modification 4 of a water treatment device according to an embodiment of the present invention.

Referring to Fig. 13, in comparison with the water treatment device 101 illustrated in Fig. 2, Modification 4 of the water treatment device 101 further includes a pressure-rising path 41 and a pump 42. The pressure-rising path 41 is connected to the filtered-water flow path 18. The control unit 15 further controls driving of the pump 42 in addition to driving of the motor 14, opening and closing of the valve 20, and driving of the pump 103.

For example, in the cleaning operation, that is, in a state where the valve 20 is closed and the motor 14 and the pump 103 are driven, the control unit 15 further drives the pump 42. Consequently, gas or liquid flows from the pump 42 to the inside of the filter 21 through the pressure-rising path 41 and the filtered-water flow path 18, thereby increasing the pressure of the inside of the filter 21.

When the pressure of the inside of the filter 21 becomes higher than the pressure of the outside of the filter 21, the gas or the liquid flows from the inside of the filter 21 to the outside of the filter 21 in the cartridge 11. As a result, substances adhering to the filter 21 are separated toward the outside of the filter 21 and discharged to the outside of the water treatment device 101 through the discharge flow path 19 and the pipe 124.

Not only during the cleaning operation but also, for example, during the chemical circulation operation described in Modification 3, the control unit 15 can apply a pressure to the inside of the filter 21 by driving the pump 42.

In the filter device described in PTL 1, a fluid to be filtered comes in contact with an outer surface of the filter, and adhering substances, which may cause clogging of the filter, are thereby separated from the filter. Thus, the filter can be cleaned. However, when the fluid to be filtered merely comes in contact with the filter, for example, adhering substances may not be separated from the filter, or adhering substances separated from the filter may adhere to the filter again. In such a case, there may be a problem in that a sufficient cleaning effect cannot be obtained, and the filtration performance decreases.

In contrast, in the water treatment device 101 according to an embodiment of the present invention, the filter 21 can rotate so that the filtering surface is moved in the circumferential direction. The untreated-water outflow unit 17 allows untreated water to flow out from the outside of the filter 21 toward the filtering surface. The filtered-water flow path 18 leads, from the inside of the filter 21, filtered water that has permeated through the filter 21. Furthermore, the control unit 15 switches between the filtration operation and the cleaning operation. During the filtration operation, in a state where the filter 21 rotates, the untreated water is allowed to flow out toward the filtering surface by the untreated-water outflow unit 17, and the filtered water is led through the filtered-water flow path 18. During the cleaning operation, in a state where the filter 21 rotates, the valve 20 is closed, and the filtered-water flow path 18 is closed, the untreated water is allowed to flow out toward the filtering surface by the untreated-water outflow unit 17.

In the cleaning operation, since the filtered-water flow path 18 is closed, filtered water accumulates inside the filter 21 without being introduced into the filtered-water flow path 18, and the inside of the filter 21 is filled with the filtered water. When untreated water is further allowed to flow out from the untreated-water outflow unit 17 toward the filtering surface, the possibility that, after the untreated water comes in contact with the filtering surface, the untreated water may flow to the outside of the filter 21 without permeating through the filter 21 increases. Accordingly, it is possible to prevent plankton, suspensoid, or the like, which may cause clogging of the filter 21, from adhering to the filter 21.

By filling the inside of the filter 21 with the filtered water, suspensoid or the like that has already adhered becomes easily separated from the filter 21.

That is, as described above, the water treatment device 101 switches between the filtration operation for filtering untreated water and the cleaning operation for efficiently cleaning the filter 21. With this structure, an improved effect of cleaning the filter 21 can be obtained.

In the water treatment device 101 according to an embodiment of the present invention, the control unit 15 controls the motor 14 that rotates the filter 21, thereby making the rotational speed of the filter 21 in the filtration operation different from the rotational speed of the filter 21 in the cleaning operation.

The higher the rotational speed of the filter 21, the larger the area of the filtering surface that comes in contact with untreated water per unit time. Thus, a large amount of untreated water that can be filtered per unit time can be ensured. However, with an increase in the rotational speed of the filter 21, a region with which the untreated water does not sufficiently come in contact is generated in the filter 21, and the filter 21 may not be sufficiently cleaned.

In view of this, as described above, the water treatment device 101 according to an embodiment of the present invention makes the rotational speed of the filter 21 in the filtration operation and the rotational speed of the filter 21 in the cleaning operation different from each other, for example, makes the rotational speed of the filter 21 in the filtration operation high and makes the rotational speed of the filter 21 in the cleaning operation low. With this structure, the rotational speed of the filter 21 can be appropriately controlled so that a large amount of untreated water that can be filtered per unit time can be ensured in the filtration operation, and the filter can be sufficiently cleaned in the cleaning operation.

In the water treatment device 101 according to an embodiment of the present invention, the opening 24 for allowing untreated water to flow out is formed in the untreated-water outflow unit 17. At least one of the discharge flow paths 25, 26, 27, and 28 for discharging water present outside the filter 21 is disposed at a position in a predetermined range extending from a region R where untreated water from the opening 24 comes in contact with the filtering surface, the position being located on the opening 24 side with respect to the filter 21. In addition, the inlets of the discharge flow paths 25, 26, 27, and 28 are directed to the region R.

This structure increases the possibility that adhering substances separated from the filter 21 may be introduced into the discharge flow path together with untreated water, and thus it is possible to prevent the adhering substances from adhering to the filter 21 again.

In the water treatment device 101 according to an embodiment of the present invention, the chemical outflow unit 32 allows a cleaning liquid to flow out toward the filtering surface. The control unit 15 switches a chemical circulation operation in which, in a state where the filter 21 rotates, the filtered-water flow path 18 is closed, and outflow of the untreated water by the untreated-water outflow unit 17 is not performed, the cleaning liquid is allowed to flow out by the chemical outflow unit 32 toward the filtering surface, the filtration operation, and the cleaning operation.

In this manner, by performing the chemical circulation operation as a step other than the filtration operation and the cleaning operation, the effect of cleaning the filter 21 can be further improved.

In the water treatment device 101 according to an embodiment of the present invention, in the cleaning operation, the control unit 15 controls the pump 42 to apply a pressure to the inside of the filter 21.

When the pressure of the inside of the filter 21 becomes higher than the pressure of the outside of the filter 21 as a result of the application of the pressure to the inside of the filter 21, gas or liquid flows from the inside of the filter 21 toward the outside of the filter 21. As a result, substances adhering to the filter 21 become easily separated toward the outside of the filter 21. That is, with the structure in which a pressure is applied to the inside of the filter 21 as described above, the effect of cleaning the filter 21 can be further improved.

In the water treatment device 101 according to an embodiment of the present invention, the filtering surface is formed to have a shape of pleats folded along radial directions of a rotation circle of the filter 21.

With this structure, a large area of the filtering surface that comes in contact with untreated water per unit time is ensured without increasing the size of the filter 21 as a whole. Thus, the amount of untreated water that can be filtered per unit time can be increased.

It is to be understood that the embodiments described above are only illustrative and are not restrictive in all respects. The scope of the present invention is defined not by the description above but by the claims described below. It is intended that the scope of the present invention includes equivalents of the claims and all modifications within the scope of the claims.

The above description encompasses a feature described as a supplementary note below.

### [Supplementary note 1]

A water treatment device including
a filter that is rotatable so that a filtering surface moves in a circumferential direction;
an untreated-water outflow unit that allows untreated water to flow out from an outside of the filter toward the filtering surface;
a filtered-water flow path for leading, from an inside of the filter, filtered water that has permeated through the filter; and
a control unit that switches between a filtration operation in which, in a state where the filter rotates, the untreated water is allowed to flow out toward the filtering surface by the untreated-water outflow unit, and the filtered water is led through the filtered-water flow path, and a cleaning operation,
in which, in a state where the filter rotates and the filtered-water flow path is closed, the untreated water is allowed to flow out toward the filtering surface by the untreated-water outflow unit, in which the filter has a cylindrical shape, is formed by using a polyethylene non-woven cloth, and performs filtration of ballast water carried in a ship or ballast water discharged from a ship.

## Claims

1. A water treatment device comprising:
a filter that is rotatable so that a filtering surface moves in a circumferential direction;
an untreated-water outflow unit that allows untreated water to flow out from an outside of the filter toward the filtering surface;
a filtered-water flow path for leading, from an inside of the filter, filtered water that has permeated through the filter; and
a control unit that switches between a filtration operation in which, in a state where the filter rotates, the untreated water is allowed to flow out toward the filtering surface by the untreated-water outflow unit, and the filtered water is led through the filtered-water flow path, and a cleaning operation, in which, in a state where the filter rotates and the filtered-water flow path is closed, the untreated water is allowed to flow out toward the filtering surface by the untreated-water outflow unit.

2. The water treatment device according to Claim 1, further comprising:
a driving unit that rotates the filter,
wherein the control unit controls the driving unit to make a rotational speed of the filter in the filtration operation and a rotational speed of the filter in the cleaning operation different from each other.

3. The water treatment device according to Claim 1 or 2,
wherein the untreated-water outflow unit has an opening for allowing the untreated water to flow out,
the water treatment device further comprises
a discharge flow path for discharging water present outside the filter, the discharge flow path being located at a position in a predetermined range extending from a region where the untreated water from the opening comes in contact with the filtering surface, the position being located on the opening side with respect to the filter, and
an inlet of the discharge flow path is directed to the region.

4. The water treatment device according to any one of Claims 1 to 3, further comprising:
a cleaning liquid outflow unit that allows a cleaning liquid to flow out toward the filtering surface,
wherein the control unit switches a cleaning liquid outflow operation in which, in a state where the filter rotates, the filtered-water flow path is closed, and outflow of the untreated water by the untreated-water outflow unit is not performed, the cleaning liquid is allowed to flow out by the cleaning liquid outflow unit toward the filtering surface, the filtration operation, and the cleaning operation.

5. The water treatment device according to any one of Claims 1 to 4, wherein, in the cleaning operation, the control unit controls a pump to apply a pressure to the inside of the filter.

6. The water treatment device according to any one of Claims 1 to 5, wherein the filtering surface is formed to have a shape of pleats folded along radial directions of a rotation circle of the filter.

7. A water treatment method in a water treatment device including
a filter that is rotatable so that a filtering surface moves in a circumferential direction,
an untreated-water outflow unit that allows untreated water to flow out toward the filtering surface, and
a filtered-water flow path for leading, from an inside of the filter, filtered water that has permeated through the filter,
the method comprising:
a step of starting a rotation of the filter; and
a step of switching between a filtration operation in which, in a state where the filter rotates, the untreated water is allowed to flow out toward the filtering surface by the untreated-water outflow unit, and the filtered water is led through the filtered-water flow path, and a cleaning operation, in which, in a state where the filter rotates and the filtered-water flow path is closed, the untreated water is allowed to flow out toward the filtering surface by the untreated-water outflow unit.
